(19) Europäisches Patentamt
European Patent Office
Office européen des brevets

(11) **EP 4 681 967 A1**

(12) **EUROPEAN PATENT APPLICATION**

(43) Date of publication:
**21.01.2026 Bulletin 2026/04**

(21) Application number: **24189786.7**

(22) Date of filing: **19.07.2024**

(51) International Patent Classification (IPC):
**B60L 3/00** (2019.01)    **B60L 7/26** (2006.01)
**B60L 7/18** (2006.01)

(52) Cooperative Patent Classification (CPC):
**B60L 3/0015; B60L 3/0076; B60L 7/18;**
B60L 2240/423; B60L 2240/461; B60L 2250/26

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **RIOS, Jean-Benoît**
**69330 MEYZIEU (FR)**
• **BARILLOT, Thomas**
**69440 MORNANT (FR)**

(74) Representative: **Lavoix**
**62, rue de Bonnel**
**69448 Lyon Cedex 03 (FR)**

Remarks:
Amended claims in accordance with Rule 137(2) EPC.

(54) **A METHOD FOR CONTROLLING A POWERTRAIN, A CONTROLLER, A POWERTRAIN AND A VEHICLE**

(57)    A method for controlling a powertrain (7) comprising:
- a primary part (19) with an electric motor (15),
- a secondary part (21) comprising wheels (4),
- a gearbox (17), and
- a controller (9), wherein the gearbox (17), is configured to, upon receiving an order given by the controller (9), evolve to a desired configuration, between an engaged configuration in which the primary part (19) and the secondary part (21) are engaged with each other and a disengaged configuration,
the method comprising the steps:
a) detecting (S23) braking intention,
b) braking (S25) the primary part (19) and controlling the electric motor (15) so that an absolute value of a relative torque between the primary part (19) and the secondary part (21) is lower than a maximal torque, and
c) disengaging (S27) the primary part (19) from the secondary part (21).

FIG.1

## Description

### TECHNICAL FIELD

The disclosure relates generally to powertrains of vehicles. In particular aspects, the disclosure relates to method for controlling a powertrain of a vehicle, computer program product, computer readable medium, controller and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A known powertrain for a vehicle comprises a gearbox which links in rotation a primary part of the powertrain comprising a motor with a secondary part of the powertrain comprising wheels. Nevertheless, when the wheels are hardly braked, especially in case of anti-lock braking system activation, the torque due to the inertia of the secondary part is absorbed by the motor and the powertrain acts like a torque spring. The absorption of the torque due to the inertia of the secondary part increases risk of damaging the powertrain, especially the motor and the gearbox, by imposing fast rotation changes to the motor. The invention aims at limiting the risk to damage the powertrain when the wheels are braked.

### SUMMARY

According to a first aspect of the disclosure, a method for controlling a powertrain comprising:

- a primary part comprising at least an electric motor,
- a secondary part comprising wheels,
- a gearbox, and
- a controller, wherein the gearbox, is configured to, upon receiving an order given by the controller, evolve to a desired configuration, between an engaged configuration in which the primary part and the secondary part are engaged with each other so as to be secured in rotation with each other and a disengaged configuration in which the primary part and the secondary part are disengaged from each other, enabling rotation of the primary part and the secondary part relative to each other,

wherein the method comprising at least the following steps:

    a) detecting an intention to brake the wheels,
    b) braking the primary part, and
    c) disengaging the primary part from the secondary part.

The first aspect of the disclosure may seek to protect the electric motor when the wheels are braked by anticipating the deceleration of the wheels and by disengaging the electric motor from the wheels. A technical benefit may include improving the disengaging of the electric motor by braking the primary part in the same time the wheels are braked.

Optionally in some examples, including in at least one preferred example, the step a) comprises the real time measurement or estimation of a value representative of an angular deceleration of the wheels. A technical benefit may include improving the detection of a braking of the wheels and the anticipation of the braking.

Optionally in some examples, including in at least one preferred example, the value measured at step a) is an inclination of a braking pedal. A technical benefit may include anticipating the braking of the wheels before the anti-lock braking system takes effect.

Optionally in some examples, including in at least one preferred example, the value measured at step a) is a rotation speed of at least one wheel. A technical benefit may include reliably controlling the brake of the primary part based on the deceleration of the wheels in real time.

Optionally in some examples, including in at least one preferred example, the value measured at step a) is measured by a safety front sensor. A technical benefit may include anticipating an emergency braking of the wheels.

Optionally in some examples, including in at least one preferred example, during step b), the electric motor is controlled so that an absolute value of a relative torque between the primary part and the secondary part is lower than a maximal torque, the maximal torque being less than 100Nm and preferably less than 20 Nm. A technical benefit may include improving the disengaging of the primary part form the secondary part.

Optionally in some examples, including in at least one preferred example, step b) comprises computing a torque applied on the primary part during the braking.

Optionally in some examples, including in at least one preferred example, the torque applied on the primary part is computed with the following expression:

$$\mathrm{Tp1} = \mathrm{Ip1} * \alpha 1$$

where:

    Tp1 is torque applied on the primary part expressed in Newton meter,
    $\alpha 1$ is a wanted angular deceleration of the electric motor deduced from the angular deceleration of the wheels expressed in radian per square second, and
    Ip1 is inertia momentum of the primary part expressed in kilogram square meter.

A technical benefit may include improving the control of the electric motor so that absolute value of a relative torque between the primary part and the secondary part is lower than a maximal torque. Another benefit may include improving the control of the electric motor so that the braking of the primary part is similar to the braking of the wheels.

Optionally in some examples, including in at least one preferred example, step b) lasts less than 200ms. A technical benefit may include improving the time to disengage the primary part to the secondary part so that the primary part is disengaged before the activation of the anti-lock braking system.

Optionally in some examples, including in at least one preferred example, step c) disengages the gearbox immediately as soon as the torque computed during step b) has been applied by the electric motor. A technical benefit may include reducing the time to disengage the primary part to the secondary part.

According to a second aspect of the disclosure, a powertrain for a vehicle comprising:

- a primary part comprising at least an electric motor,
- a secondary part comprising wheels,
- a gearbox, and
- a controller, wherein the powertrain is configured to, upon receiving an order given by the controller, evolve to a desired configuration, between an engaged configuration in which the primary part and the secondary part are engaged with each other so as to be secured in rotation with each other and a disengaged configuration in which the primary part and the secondary part are disengaged from each other, enabling rotation of the primary part and the secondary part relative to each other,

The powertrain is configured to implement the method as defined above.

The second aspect of the disclosure may seek to protect the electric motor when the wheels are braked by anticipating the deceleration of the wheels and by disengaging the electric motor from the wheels. A technical benefit may include improving the disengaging of the electric motor by braking the primary part in the same time the wheels are braked.

According to a third aspect of the disclosure, a vehicle comprising a powertrain as defined above. The third aspect of the disclosure may seek to protect the electric motor when the wheels are braked by anticipating the deceleration of the wheels and by disengaging the electric motor from the wheels. A technical benefit may include improving the disengaging of the electric motor by braking the primary part in the same time the wheels are braked.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein controller, computer readable medium, and computer program product associated with the above discussed technical benefits.

**BRIEF DESCRIPTION OF THE DRAWINGS**

Examples are described in more detail below with reference to the appended drawings.

**FIG. 1** is a schematic view of a vehicle according to an embodiment of the invention.
**FIG. 2** is a flowchart of an example of a method according to an embodiment of the invention.

**DETAILED DESCRIPTION**

The detailed description set forth below provides information and examples of the disclosed technology with sufficient detail to enable those skilled in the art to practice the disclosure.

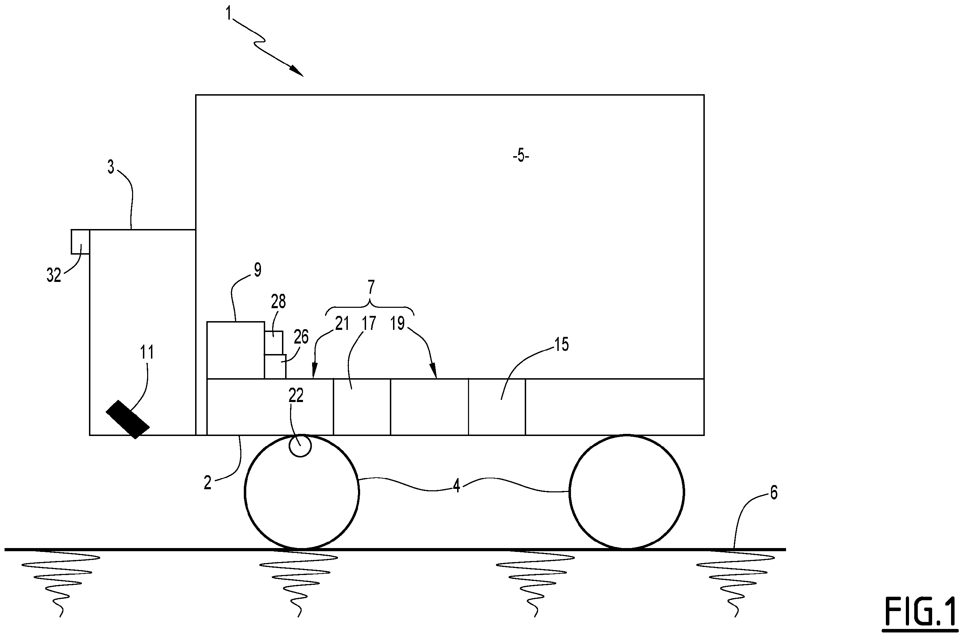

Figure 1 depicts a vehicle 1, comprising a frame 2, a driving cabin 3, a load compartment 5, a powertrain 7 and a controller 9, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The driving cabin 3 comprises a braking pedal 11. The braking pedal 11 can be tilted in different positions when the driver presses the braking pedal 11 with his foot to request braking torque. The more the driver presses the braking pedal the more braking torque is requested.

The powertrain 7 comprises a primary part 19. The primary part 19 comprises an electric motor 15. The electric motor 15 comprises an output shaft, not disclosed in the figures.

The powertrain 7 comprises a secondary part 21. The secondary part 21 comprises wheels 4. The wheels 4 are mounted on the frame 2 and configured to rotate to enable the movement of the vehicle 1 on a road 6.

The powertrain 7 comprises a gearbox 17, configured to link the primary part 19 to the secondary part 21. More precisely, an input of the gearbox is driven by the electric motor 15 of the primary part 19, and the secondary part 21 is driven by an output of the gearbox for driving the wheels 4. Overall, the electric motor 15 drives the wheels 4 through the gearbox 17.

The gearbox 17 is configured to, upon receiving an order given by the controller 9, evolve to a desired configuration, between an engaged configuration in which the primary part 19 and the secondary part 21

are engaged with each other so as to be secured in rotation with each other and a disengaged configuration in which the primary part 19 and the secondary part 21 are disengaged from each other, enabling rotation of the primary part 19 and the secondary part 21 relative to each other.

The output shaft rotates when the electric motor 15 is actuated. The rotation of the output shaft, when the powertrain 7 is in the engaged configuration, drives the wheels 4. Doing so, the powertrain 7 provides a propulsion force to the vehicle 1 to propel the vehicle 1. The propulsion force is the result of a mechanical transformation by the powertrain 7 of a torque provided by the electric motor 15 to the output shaft.

The controller 9 is configured to control the powertrain 7 and more precisely to disengage the primary part 19 from the secondary part 21 when the wheels 4 are braked.

The controller 9 is adapted to carry out a method for controlling the powertrain 7, such method being thus a computer-implemented method.

More generally, the controller 9 is a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 9 comprises a processor. The processor comprises a processing unit, memories and a reader. The reader is adapted to read a computer readable medium.

The computer program product comprises a computer readable medium.

The computer readable medium is a medium that can be read by the reader of the processor. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of the method to control the powertrain 7 when the computer program is run by the processing unit.

The controller 9 is connected to the braking pedal 11, the braking pedal 11 is configured to activate a braking system 26, not represented, which brakes the wheels 4. The braking pedal 11 is also configured to activate an anti-lock braking system 28, not represented, in case of hard activation of the braking system 26.

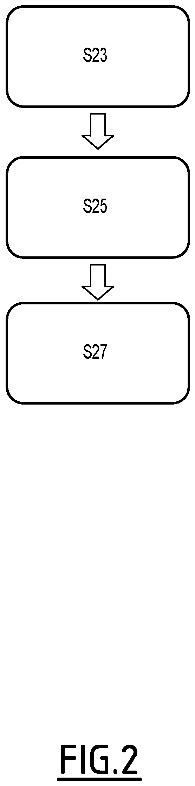

An example of operating of the controller 9 is now described in reference to figure 2, which is a flowchart of an example of a method for controlling the powertrain 7.

The method for controlling the powertrain 7 aims at disengaging the primary part 19 from the secondary part 21 when the wheels 4 are braked.

The disengaging of the primary part 19 from the secondary part 21 avoid that the powertrain 7 is damaged during the braking. Indeed, when the wheels 4 are brakes, especially when the anti-lock braking system 28 is activated, and when the primary part 19 and the secondary part 21 are engaged, the torque due to an inertia of the secondary part 21 is transmitted to the primary part 19. Thus, the electric motor 15 acts as a torque spring to absorb the torque due to the inertia of the secondary part 21. The absorption of the torque due to the inertia of the secondary part 21 imposes fast rotation changes to the electric motor 15 and damages the powertrain 7.

According to the example of figure 2, the method for controlling the powertrain 7 comprises a step of detecting S23 and a step of braking S25 and a step of disengaging S27. The method is realized when the electric motor 15 is running.

During the step of detecting S23, advantageously, the braking pedal 11 is providing to the controller 9 a real time measurement or an estimation of a value representative of a requested deceleration of the wheels 4.

Advantageously, the value measured is the inclination of the braking pedal 11. The inclination of the braking pedal 11 represents the order to the braking system 26 to brake the wheels. The intensity of the braking and the activation of the anti-lock braking system 28 depend on the inclination of the braking pedal 11 and the controller 9 estimates the deceleration of the wheels 4 from the inclination of the braking pedal 11.

The control of the powertrain 7 based on the inclination of the braking pedal is particularly advantageous. Indeed, based on the inclination of the braking pedal 11 the controller 9 estimates the angular deceleration of the wheels 4 before the activation of the anti-lock braking system 28. Thus, the controller 9 controls the braking of the powertrain 7 at the same time as the braking system 26 brakes the wheels 4 and the primary part 19 is disengaged from the secondary part 21 before the activation of the anti-lock braking system 28. Thus, the electric motor 15 is protected from the torque due to the inertia of the secondary torque when the anti-lock braking system 28 is activated.

After the step of detecting S23, the step of braking S25 is implemented.

During the step of braking S25, the controller 9 controls the electric motor 15 to brake the primary part 19 such that a wasted deceleration of the primary part 19 deduced from the angular deceleration of the wheels 4 so that the wasted deceleration is the same as the deceleration of the secondary part 21 before the activation of the anti-lock braking system 28.

Advantageously, the controller computes a torque applied on the primary part 19 during the braking to ensure that the primary part 19 has the wasted deceleration.

Advantageously, the torque applied on the primary part is computed with the following expression:

$$Tp1 = Ip1*\alpha1$$

where:

Tp1 is torque applied on the primary part expressed in Newton meter,

$\alpha1$ is a wanted angular deceleration of the electric motor 15 deduced from the angular deceleration of the wheels expressed in radian per square second, and

Ip1 is inertia momentum of the primary part expressed in kilogram square meter.

Advantageously, the control of the electric motor 15 and the deceleration of the primary part 19 ensure that an absolute value of a relative torque between the primary part 19 and the secondary part 21 is lower than a maximal torque.

The maximal torque corresponds to the maximal torque allowing the disengaging of the primary part 19 from the secondary part 21 without damaging the gearbox 17. The maximal torque depends on the gearbox 17. Advantageously, the maximal torque is less than 100Nm and preferably less than 20 Nm. In other words, the relative torque between the primary part 19 and the secondary part 21 is comprised in the interval [-100Nm; 100Nm].

The step of braking S25 lasts less than a reaction time of the anti-lock braking system 28, which is the time between the activation of the anti-lock braking system 28 and the first effect of the anti-lock braking system 28. The reaction time of the anti-lock braking system 28 depends on the anti-lock braking system 28. Advantageously, the step of braking S25 the powertrain 7 lasts less than 200ms.

After the step of braking S25, the step of disengaging S27 is implemented. During the step of disengaging S27, the primary part 19 is disengaged from the secondary part 21, in other words the gearbox 17 is disengaged.

Advantageously, the controller 9 disengages the gearbox 17 immediately as soon as the torque computed during the step of braking S25 has been applied by the electric motor 15. In other words, the gearbox 17 is disengaged as soon as the absolute value of a relative torque between the primary part 19 and the secondary part 21 is lower than the maximal torque.

Preferably, the step of detecting S23, the step of braking S25 and the step of disengaging S27 tend to be implemented simultaneously to dissociate the electric motor 15 from the braking of at least one of the wheels 4 and to lower the time before the activation of the anti-lock braking system 28.

In a variant, applied when the transmission between the speed sensor 22, the controller 9 and the gearbox is instantaneous, the controller 9 is connected to a speed sensor 22 of the vehicle 1. The speed sensor 22 is configured to measure a physical quantity that reflects a rotation speed of the secondary part 21.

During the step of detecting S23, advantageously, the speed sensor 22 provided to controller 9 the real time measurement or estimation of a value representative of an angular deceleration of the wheels 4. Advantageously, the value measured by the speed sensor 22 is a rotation speed of at least one wheel 4. More generally, the value measured is a rotation speed of a shaft or a gear, which has a rotation speed equal to the rotation speed of the wheels 4 multiplied by a transmission ratio.

In a variant, the controller 9 is connected to a safety front sensor 32 of the vehicle 1 and the controller is able to activate the braking system 26 and the anti-lock braking system 28 without action of the driver. The safety front sensor 32 is a camera, a radar or any other sensor able to detect a danger, such as a risk of collision, and the need of an automatic emergency braking.

The step of detecting S23 comprises the real time measurement or estimation of a value representative of an angular deceleration of the wheels 4 by the safety front sensor 32. For example, the value measured is the distance with the possible collision and the controller 9 deduces, from this distance, the angular deceleration of the wheels 4 to avoid the collision.

In a variant the step of detecting S23 can, instead of detecting depression of a brake pedal, comprise detecting requested braking torque initiated by a control unit requesting a braking torque. Thus, the vehicle can comprise an automatic cruise control function or being an autonomous vehicle requesting a braking torque to be detected in step S23.

In the following, possible features and feature combinations of the present disclosure are presented as a list of numbered examples:

**Example 1:** A method for controlling a powertrain 7 comprising:

- a primary part 19 comprising at least an electric motor 15,
- a secondary part 21 comprising wheels 4,

- a gearbox 17, and
- a controller 9, wherein the gearbox 17, is configured to, upon receiving an order given by the controller 9, evolve to a desired configuration, between an engaged configuration in which the primary part 19 and the secondary part 21 are engaged with each other so as to be secured in rotation with each other and a disengaged configuration in which the primary part 19 and the secondary part 21 are disengaged from each other, enabling rotation of the primary part 19 and the secondary part 21 relative to each other,

wherein the method comprising at least the following steps:

a) detecting S23 an intention to brake the wheels 4,
b) braking S25 the primary part 19, and
c) disengaging S27 the primary part 19 from the secondary part 21.

**Example 2:** The method of the previous example, wherein step a) comprises the real time measurement or estimation of a value representative of an angular deceleration of the wheels 4.

**Example 3:** The method of the previous example, wherein the value measured at step a) is an inclination of a braking pedal 11.

**Example 4:** The method of the example 2, wherein the value measured at step a) is a rotation speed of at least one wheel 4.

**Example 5:** The method of the example 2 wherein the value measured at step a) is measured by a safety front sensor 32.

**Example 6:** The method of any one of the previous examples, wherein during step b), the electric motor 15 is controlled so that an absolute value of a relative torque between the primary part 19 and the secondary part 21 is lower than a maximal torque, the maximal torque being less than 100Nm and preferably less than 20 Nm.

**Example 7:** The method of any one of the examples 2 to 5, wherein, step b) comprises computing a torque applied on the primary part 19 during the braking.

**Example 8:** The method of the previous example, wherein the torque applied on the primary part 19 is computed with the following expression:

$$Tp1 = Ip1 * \alpha1$$

where:

Tp1 is torque applied on the primary part 19 expressed in Newton meter,
$\alpha1$ is a wanted angular deceleration of the electric motor 15 deduced from the angular deceleration of the wheels 4 expressed in radian per square second, and
Ip1 is inertia momentum of the primary part 19 expressed in kilogram square meter.

**Example 9:** The method of any one of the previous examples, wherein step b) lasts less than 200ms.

**Example 10:** The method of any one of the previous examples, wherein step c) disengages the gearbox 17 immediately as soon as the torque computed during step b) has been applied by the electric motor 15.

**Example 11:** A computer program product comprising a computer readable medium, having thereon a computer program comprising program instructions, the computer program being loadable into a processing unit and adapted to cause execution of a method of any one of the examples 1 to 9 when the computer program is run by the processing unit.

**Example 12:** A computer readable medium having encoded thereon the computer program of the example 10.

**Example 13:** A controller 9 comprising a computer readable medium according having encoded thereon a computer program comprising program instructions, the computer program being loadable into a -processing unit and adapted to cause execution of a method of any one of the examples 1 to 9 when the computer program is run by the parameter processing unit.

**Example 14:** A powertrain 7 for a vehicle 1 comprising:

- a primary part 19 comprising at least an electric motor 15,
- a secondary part 21 comprising wheels 4,
- a gearbox 17, and
- a controller 9, wherein the powertrain is configured to, upon receiving an order given by the controller 9, evolve to a desired configuration, between an engaged configuration in which the primary part 19 and the secondary part 21 are engaged with each other so as to be secured in rotation with each other and a disengaged configuration in which the primary part 19 and the secondary part 21 are disengaged from each other, enabling rotation of the primary part 19 and the secondary part 21 relative to each other,

characterized in that the powertrain 7 is configured to implement the method according to any one of the claims 1 to 9.

**Example 15:** A vehicle 1 comprising a powertrain 7 of the previous example.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.  A method for controlling a powertrain (7) comprising:

    - a primary part (19) comprising at least an electric motor (15),
    - a secondary part (21) comprising wheels (4),
    - a gearbox (17), and
    - a controller (9), wherein the gearbox (17), is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,

    wherein the method comprising at least the following steps :

      a) detecting (S23) an intention to brake the wheels (4),
      b) braking (S25) the primary part (19), and
      c) disengaging (S27) the primary part (19) from the secondary part (21).

2.  The method according to the previous claim, wherein step a) comprises the real time measurement or estimation of a value representative of an angular deceleration of the wheels (4).

3.  The method according to the previous claim wherein the value measured at step a) is an inclination of a braking pedal (11).

4.  The method according to the claim 2 wherein the value measured at step a) is a rotation speed of at least one wheel (4).

5.  The method according to the claim 2 wherein the value measured at step a) is measured by a safety front sensor (32).

6.  The method according to any one of the previous claims, wherein during step b), the electric motor (15) is controlled so that an absolute value of a relative torque between the primary part (19) and the secondary part (21) is lower than a maximal torque, the maximal torque being less than 100Nm and preferably less than 20 Nm.

7.  The method according to any one of the claims 2 to 5, wherein step b) comprises computing a torque applied on the primary part (19) during the braking.

8.  The method according to the previous claim, wherein the torque applied on the primary part (19) is computed with the following expression:

$$Tp1 = Ip1*\alpha1$$

where:

Tp1 is torque applied on the primary part (19) expressed in Newton meter,
$\alpha1$ is a wanted angular deceleration of the electric motor (15) deduced from the angular deceleration of the wheels (4) expressed in radian per square second, and
Ip1 is inertia momentum of the primary part (19) expressed in kilogram square meter.

9. The method according to any one of the previous claims wherein step b) lasts less than 200ms.

10. The method according to any one of the previous claims wherein step c) disengages the gearbox (17) immediately as soon as the torque computed during step b) has been applied by the electric motor (15).

11. A computer program product comprising a computer readable medium, having thereon a computer program comprising program instructions, the computer program being loadable into a processing unit and adapted to cause execution of a method according to any one of the claims 1 to 10 when the computer program is run by the parameter processing unit.

12. A computer readable medium having encoded thereon a computer program according to claim 11.

13. A controller (9) comprising a computer readable medium having encoded thereon a computer program comprising program instructions, the computer program being loadable into a -processing unit and adapted to cause execution of a method according to any one of the claims 1 to 10 when the computer program is run by the parameter processing unit.

14. A powertrain (7) for a vehicle (1) comprising:

- a primary part (19) comprising at least an electric motor (15),
- a secondary part (21) comprising wheels (4),
- a gearbox (17), and
- a controller (9), wherein the powertrain is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,

characterized in that the powertrain is configured to implement the method according to any one of the claims 1 to 10.

15. A vehicle (1) comprising a powertrain (7) according to the previous claim.

**Amended claims in accordance with Rule 137(2) EPC.**

1. A method for controlling a powertrain (7) comprising:

- a primary part (19) comprising at least an electric motor (15),
- a secondary part (21) comprising wheels (4),
- a gearbox (17), and
- a controller (9), wherein the gearbox (17), is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other,

wherein the method comprising at least the following steps :

a) detecting (S23) an intention to brake the wheels (4),
b) braking (S25) the primary part (19), and
c) disengaging (S27) the primary part (19) from the secondary part (21) the method being **characterized in that** during step b) a torque, computed by the controller (9), is applied on the primary part (19) to ensure that the primary part (19) has a wanted deceleration.

2. The method according to the previous claim, wherein step a) comprises the real time measurement or estimation of a value representative of an angular deceleration of the wheels (4).

3. The method according to the previous claim wherein the value measured at step a) is an inclination of a braking pedal (11).

4. The method according to the claim 2 wherein the value measured at step a) is a rotation speed of at least one wheel (4).

5. The method according to the claim 2 wherein the value measured at step a) is measured by a safety front sensor (32).

6. The method according to any one of the previous claims, wherein during step b), the electric motor (15) is controlled so that an absolute value of a relative torque between the primary part (19) and the secondary part (21) is lower than a maximal torque, the maximal torque being less than 100Nm and preferably less than 20 Nm.

7. The method according to any one of the claims 2 to 5, wherein step b) comprises computing the torque applied on the primary part (19) during the braking.

8. The method according to the previous claim, wherein the torque applied on the primary part (19) is computed with the following expression:

$$Tp1 = Ip1 * \alpha 1$$

where:

Tp1 is torque applied on the primary part (19) expressed in Newton meter,
$\alpha 1$ is a wanted angular deceleration of the electric motor (15) deduced from the angular deceleration of the wheels (4) expressed in radian per square second, and
Ip1 is inertia momentum of the primary part (19) expressed in kilogram square meter.

9. The method according to any one of the previous claims wherein step b) lasts less than 200ms.

10. The method according to any one of the previous claims wherein step c) disengages the gearbox (17) immediately as soon as the torque computed during step b) has been applied by the electric motor (15).

11. A computer program product comprising a computer readable medium, having thereon a computer program comprising program instructions, the computer program being loadable into a processing unit and adapted to cause execution of a method according to any one of the claims 1 to 10 when the computer program is run by the parameter processing unit.

12. A computer readable medium having encoded thereon a computer program according to claim 11.

13. A controller (9) comprising a computer readable medium having encoded thereon a computer program comprising program instructions, the computer program being loadable into a -processing unit and adapted to cause execution of a method according to any one of the claims 1 to 10 when the computer program is run by the parameter processing unit.

14. A powertrain (7) for a vehicle (1) comprising:

- a primary part (19) comprising at least an electric motor (15),
- a secondary part (21) comprising wheels (4),
- a gearbox (17), and
- a controller (9) according to claim 13, wherein the powertrain is configured to, upon receiving an order given by the controller (9), evolve to a desired configuration, between an engaged configuration in which the primary part (19) and the secondary part (21) are engaged with each other so as to be secured in rotation with each other and a disengaged configuration in which the primary part (19) and the secondary part (21) are disengaged from each other, enabling rotation of the primary part (19) and the secondary part (21) relative to each other.

15. A vehicle (1) comprising a powertrain (7) according to the previous claim.

FIG.1

S23

S25

S27

FIG.2

Europäisches
Patentamt

European
Patent Office

Office européen
des brevets

# EUROPEAN SEARCH REPORT

**Application Number**

EP 24 18 9786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/182532 A1 (TOBLER BILL [US] ET AL) 18 August 2005 (2005-08-18) | 1,2,4, 7-15 | INV. B60L3/00 |
| Y | * paragraphs [0002], [0007], [0022], [0027] * <br> * figures 1, 2 * | 3,5,6 | B60L7/26 B60L7/18 |
| | ----- | | |
| Y | EP 4 082 815 A1 (VOLVO TRUCK CORP [SE]) 2 November 2022 (2022-11-02) | 3,6 | |
| A | * paragraph [0026] * <br> * figure 2 * | 1,11-15 | |
| | ----- | | |
| Y | US 2018/135744 A1 (KUANG MING LANG [US] ET AL) 17 May 2018 (2018-05-17) | 5 | |
| A | * paragraph [0043] * | 1,11-15 | |
| | ----- | | |

**TECHNICAL FIELDS SEARCHED (IPC)**

B60L

The present search report has been drawn up for all claims

| Place of search | Date of completion of the search | Examiner |
|---|---|---|
| The Hague | 7 January 2025 | Wirth, Sebastian |

EPO FORM 1503 03.82 (P04C01)

## ANNEX TO THE EUROPEAN SEARCH REPORT
## ON EUROPEAN PATENT APPLICATION NO.

EP 24 18 9786

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| US 2005182532 A1 | 18-08-2005 | DE 102005004389 A1<br>GB 2411446 A<br>US 2005182532 A1<br>US 2007142993 A1 | 10-11-2005<br>31-08-2005<br>18-08-2005<br>21-06-2007 |
| EP 4082815 A1 | 02-11-2022 | NONE | |
| US 2018135744 A1 | 17-05-2018 | CN 108068794 A<br>DE 102017126256 A1<br>US 2018135744 A1 | 25-05-2018<br>17-05-2018<br>17-05-2018 |

EPO FORM P0459

For more details about this annex : see Official Journal of the European Patent Office, No. 12/82